# EUROPÄISCHE PATENTSCHRIFT

(11) **EP 3 277 624 B1**
(45) Veröffentlichungstag und Bekanntmachung des Hinweises auf die Patenterteilung: **06.05.2020**
(21) Anmeldenummer: 16712321.5
(22) Anmeldetag: 24.03.2016
(51) Int. Cl.: C01B 6/04, C07F 5/02, C07F 5/06, C01B 6/00

(54) **HOCHREAKTIVE METALLHYDRIDE, VERFAHREN ZU DEREN HERSTELLUNG UND ANWENDUNG**
HIGHLY REACTIVE METAL HYDRIDES, PROCESS FOR THEIR PREPARATION AND USE
HYDRURES MÉTALLIQUES HAUTEMENT RÉACTIFS, PROCÉDÉ DE PRODUCTION ET APPLICATION

(30) Priorität: 02.04.2015 DE 102015206045; 16.04.2015 DE 102015206894
(43) Veröffentlichungstag der Anmeldung: 07.02.2018
(73) Patentinhaber: Albemarle Germany GmbH, 65926 Frankfurt am Main (DE)
(72) Erfinder: WIETELMANN, Ulrich, 61381 Friedrichsdorf (DE); KURTH, Christopher, 63110 Rodgau (DE); SCHERER, Stefan, 64347 Griesheim (DE); RITTMEYER, Peter, 65843 Sulzbach/Taunus (DE); STOLL, Armin, 69493 Hirschberg an der Bergstraße (DE); LISCHKA, Uwe, 60437 Frankfurt am Main (DE)
(86) Internationale Anmeldenummer: PCT/EP2016/056535
(87) Internationale Veröffentlichungsnummer: WO 2016/156195

(56) Entgegenhaltungen:
- EP-A1- 0 003 564
- EP-A1- 0 685 425
- US-A- 3 998 941
- US-A- 4 327 071
- US-A1- 2003 053 948
- BOGDANOVIC B ET AL: "Diorganomagnesium Compounds from Magnesium, Hydrogen, and 1-Alkenes and Their Application in Synthesis", EUROPEAN JOURNAL OF INORGANIC CHEMISTRY, WILEY-VCH VERLAG, WEINHEIM, DE, Bd. 126, Nr. 6, 1. Juni 1993 (1993-06-01), Seiten 1371-1383, XP002006062, ISSN: 1434-1948, DOI: 10.1002/CBER.19931260616 [gefunden am 2006-01-26]
- Y Zhang ET AL: "Highly active alkali metal hydrides; their catalytic syntheses and properties", J. Mol. Catal, 1. Januar 1993 (1993-01-01), Seiten 211-221, XP055280734, Gefunden im Internet: URL:http://ac.els-cdn.com/030451029385055X /1-s2.0-030451029385055X-main.pdf?_tid=317 b6304-32ef-11e6-a426-00000aacb35e&acdnat=1 465991539_e570c64617a7fd03ac1d398e180873b6 in der Anmeldung erwähnt

## Beschreibung

Gegenstand der vorliegenden Patentschrift ist ein Verfahren zur Herstellung von hochreaktiven Alkalimetall- oder Erdalkalimetall-Hydriden MHₙ* mit n = 1 oder 2 entsprechend der Wertigkeit des Metalls M und Verfahren für die Umsetzung mit Lewis-Säuren der 3. Hauptgruppe des Periodensystems der Elemente oder zur Hydrometallierung von Olefinen unter Einsatz der hergestellten hochreaktiven Alkalimetall- oder Erdalkalimetall-Hydride MHₙ*.

Die Hydride der Metalle der 1. und 2. Gruppe des PSE gehören zu den salzartigionischen Verbindungen und sie werden in der Regel durch Umsetzung des betreffenden Metalls mit Wasserstoff bei erhöhten Temperaturen und unter Wasserstoffatmosphäre hergestellt. (P. Rittmeyer, U. Wietelmann, Ullmann's Encyclopedia of Industrial Chemistry, VCH Weinheim, Vol. A 13, 1989). So wird das sehr stabile Lithiumhydrid bei 700 - 900°C unter 1 bar Wasserstoffatmosphäre in der Schmelze synthetisiert. Nach vollständiger Reaktion wird die Schmelze abgekühlt und das erstarrte Hydrid gebrochen und gemahlen. Natriumhydrid wird ebenfalls im geschmolzenen Zustand in einem hochsiedenden Öl bei 250 - 300°C unter Wasserstoff hergestellt. Magnesiumhydrid wird aus pulverförmigem Magnesium bei 300 - 400°C unter einem H₂-Druck von 100 - 150 bar synthetisiert.

Die auf diese Art hergestellten Metallhydridpulver sind relativ wenig reaktiv, d.h. sie besitzen nur relativ schwach basische Eigenschaften (P.A.A. Klusener, L. Brandsma, H.D. Verkruijsse, P.v. Rague Schleyer, T. Friedl, R. Pi, Angew. Chem. 98 (1986), 458-9) und sie sind beispielsweise für die Hydridübertragung an Lewis-Säuren des Typs R₃B (R = sterisch gehinderte Alkylgruppe, z.B. sec-Butyl) nicht oder nur wenig geeignet. Dies gilt insbesondere für Lithiumhydrid. Um kommerzielles Lithiumhydrid beispielsweise für die Herstellung von Lithium tri-*sec*-butylborhydrid aus Tri-sec-butylboran (B(*sec*Bu)₃) nutzen zu können, bedarf es eines Katalysators, beispielsweise eines Metallaminoborhydrids. Jedoch werden bei Raumtemperatur (RT) relativ lange Reaktionszeiten (EP 1272496 B1, 700 Minuten, s. Beispiel 5) für eine vollständige Reaktion benötigt. Es ist weiterhin bekannt, Alkalimetall dreifach alkylsubstituierter Borhydridverbindungen M[R¹R²R³BH] aus einem Alkalimetall, einem Wasserstoffdonor und einem dreifach alkylsubstituierten Boran herzustellen. Der Wasserstoffdonor ist bevorzugt ausgewählt aus der Gruppe bestehend aus Wasserstoff, Deuterium, Tritium, Ether, Cyclohexadien, Cyclohexen. Im Falle eines Alkalimetalls mit Ausnahme von Kalium ist die Gegenwart eines Übergangsmetallkatalysators (z.B. FeCl₃) und/oder einer polycyclischen aromatischen Verbindung (z.B. Naphthalin, Phenanthren) notwendig (US 5,886,229). Nachteilig ist dabei, dass die entstehende Produktlösung durch diese Katalysatoren bzw. deren Abbauprodukte verunreinigt ist.

Es wurde weiterhin über hochreaktive Alkalimetallhydridreagenzien (MHₙ*) berichtet, die für Metallierungsreaktionen gut einsetzbar sein sollen. Mit hochgestelltem Sternchen ("*") wird die hochreaktive Variante des jeweiligen Metallhydrids (MHₙ*) oder Metalls (M²*) gekennzeichnet. Die Herstellung solcher Reagenzien wurde für M = Li im Überblick beschrieben (U. Wietelmann, Lithium Hydride, Lithium Halides, LiO and LiS - Compounds, Science of Synthesis (Houben-Weyl, Methods of Molecular Transformations) Vol. 8, Chap. 8.1.2 - 8.1.5, 2006). In der Regel geht die Herstellung solcher reaktiver Hydridspezies von teuren Rohstoffen (beispielsweise Butyllithium - n-BuLi in N,N,N',N'-Tetramethylethylendiamin - TMEDA) aus, weshalb derartige Produkte keine kommerzielle Relevanz aufweisen. Die wichtigste Herstellroute besteht in der Hydrogenolyse von n-BuLi/TMEDA mittels Wasserstoff oder 1,3-Cyclohexadien (P.A.A. Klusener, L. Brandsma, H.D. Verkruijsse, P.v. Rague Schleyer, T. Friedl, R. Pi, Angew. Chem. 98 (1986), 458-9):

C₄H₉Li/TMEDA + H₂ → C₄H₁₀ + LiH*↓ + TMEDA (1)

Es wurde weiterhin über die Synthese von aktiven Alkalimetallhydridverbindungen der Elemente Li, Na und K durch Umsetzung von stückigem Alkalimetall in Tetrahydrofuran (THF) bei 40 °C in Anwesenheit einer Katalysatorkombination bestehend aus einer Übergangsmetallverbindung, beispielsweise TiCl4 und Naphthalin unter Wasserstoffatmosphäre berichtet (Y. Zhang, S. Liao, Y. Xu, J. Mol. Cat. 84 (1993) 211-221). Das auf diese Weise hergestellte NaH* konnte zur Dehalogenierung von Brom- und Chlorbenzol in siedendem THF verwendet werden. Weiterhin können LiH* und NaH* in Gegenwart diverser Übergangsmetallkatalysatoren zur Reduktion von Hexen zu Hexan verwendet werden. An der zuletzt beschriebenen Synthesevariante ist nachteilig, dass die entstehenden Synthesegemische durch eine Kombination von Übergangsmetallen und Naphthalin verunreinigt sind.

Da handelsübliches Magnesiumhydrid zu wenig reaktiv ist, um es für Synthesen von z.B. Dialkylmagnesiumverbindungen durch Hydromagnesierung von Olefinen nutzen zu können, hat es Versuche gegeben, es in reaktiverer Form herzustellen. Aktives Magnesiumhydrid kann durch Hochdruckhydrierung von Grignardverbindungen bei höheren Temperaturen (75-150°C, 350 bar) gemäß

2 RMgX + 2 H₂ ---> 2 RH + MgX₂ + MgH₂* (2)

gewonnen werden (W.E. Becker, E.C. Ashby, J. Org. Chem. 29, 954 (1964)). In ähnlicher Weise können auch Dialkylmagnesiumverbindungen, z.B. Dibutylmagnesium, durch Hochdruckhydrogenolyse (5 MPa) bei 200°C in MgH₂* umgewandelt werden (E.J. Setijadi, C. Boyer, Phys. Chem. Chem. Phys. 2012, 14, 11386-97). Aufgrund der ungünstigen Bedingungen, der teuren Mg-Quellen und im Falle der Grignardverbindungen der unvermeidlichen Verunreinigung mit Magnesiumhalogeniden (MgX₂) hat diese MgH₂*-Bildungsweise keine Bedeutung gewonnen.

Weiterhin wurde eine Methode zur Herstellung von hochreaktivem Magnesiumhydrid durch Hydrierung von Mg-Metall in THF-Suspension und in Gegenwart eines chromhaltigen Homogenkatalysators beschrieben (B. Bogdanovic, P. Bons, S. Konstantinovic, M. Schwickardi, U. Westeppe, Chem. Ber. 1993, 126, 1371-83; US 4554153 A1). Der THF-lösliche Katalysator besteht aus einem CrCl₃/Mg-Anthracen-Komplex. Die Hydrierung läuft nur unter Hochdruckbedingungen (z.B. 80 bar). Das auf diese Art hergestellte aktive Magnesiumhydrid MgH₂* wird in Gegenwart eines Übergangsmetallkatalysators, das ist eine Halogenverbindung von Metallen der IV. bis VIII. Nebengruppe des PSE, vorzugsweise in THF im Temperaturbereich 0 bis 200 °C und einem Druck von 1 bis 300 bar mit einem Olefin umgesetzt. Gemäß der Schrift EP 0014983 B1 werden Dialkylmagnesiumverbindungen mit mäßigen bis sehr guten Ausbeuten als Lösungen in THF erhalten. Diese Synthesevariante ist aufgrund der Verwendung giftiger Chromverbindungen und der notwendigen hohen Wasserstoffdrücke bei der MgH₂*-Herstellung ebenfalls ungünstig.

Aus dem Dokument EP 514707 B1 ist ein weiteres Verfahren bekannt, bei dem Magnesiumhydrid vor oder während der Umsetzung mit einem Olefin durch Mahlen auf eine Teilchengröße von ≤ 10 µm, bevorzugt ≤ 1 µm ohne Zusatz komplexer Katalysatoren aktiviert wird. Bei der Umsetzung mit dem Olefin in einem Etherlösemittel, bevorzugt THF oder Diglyme, wird als Katalysator ein Übergangsmetallhalogenid gemäß EP 0014983 B1 zugegeben. Nachteilig ist, dass die Ausbeuten an Dialkylmagnesiumverbindungen in der Regel gering sind (25-34 %).

EP 0 003 564 A1 betrifft ein katalytisches Verfahren zur Herstellung von Magnesiumhydriden unter milden Bedingungen. Dazu soll Magnesium in Gegenwart eines Katalysators bestehend aus einer Verbindung eines Metalls der 4. bis 8. Nebengruppe des periodischen Systems und einer metallorganischen Verbindung bzw. eines Hydrids M-C bzw. M-H der Metalle M der 1. bis 3. Hauptgruppe sowie gegebenenfalls in Gegenwarteines Aktivators A wie eines polycyclischen Aromaten oder eines tertiären Amins sowie gegebenenfalls in Gegenwart eines Halogenids MgX₂ mit X = Cl, Br, J mit Wasserstoff umgesetzt werden.

EP 0 685 425 A1 beschreibt ein Verfahren zur Herstellung von Magnesiumhydrid, welches insbesondere in aktiven, reversibel H₂ aufnehmenden Magnesiumhydrid- Magnesium-Wasserstoff-Speichersystemen eingesetzt werden kann. EP 0 685 425 A1 schlägt zur Herstellung von Magnesiumhydrid unter Zusatz eines Katalysators für die Wasserstoffaufnahme unter Hydridbildung vor, dass dem zu hydrierenden feinteiligen Magnesium als Katalysator feinverteiltes, hochreaktives Magnesium zugesetzt und die Hydrierung bei einer Temperatur von > 250 °C und einem Druck von 0,5 bis 5 MPa durchgeführt wird.

Die Erfindung hat sich die Aufgabe gestellt, ein Verfahren anzugeben, welches ausgehend von preiswerten, kommerziell verfügbaren Rohstoffen unter milden Bedingungen und ohne Verwendung von giftigen Übergangsmetallkatalysatoren (z.B. Chrom) die Synthese von reaktiven Metallhydriden (MHₙ*) der 1. und 2. Gruppe des Periodensystems ermöglicht. Die Hydride sollen außerdem möglichst direkt in einer für synthetische Zwecke nützlichen Form (d.h. als Pulver oder Dispersionen in einem Lösungsmittel) anfallen und eine so hohe Reaktivität aufweisen, dass sie eine weite synthetische Anwendungsbreite haben, also
- zur Addition an Lewissäuren wie Trialkylboranen
- zur Addition an olefinische Bindungen (also zur Hydrometallierung) und
- zur Deprotonierung acider Verbindungen (beispielsweise CH-Säuren)
in der Lage sind.

Erfindungsgemäß wird die Aufgabe durch ein Verfahren zur Herstellung von hochreaktiven Alkalimetall- oder Erdalkalimetall-Hydriden MHₙ* mit n = 1 oder 2 entsprechend der Wertigkeit des Metalls M gelöst, bei dem Metalle M der ersten oder zweiten Periode des Periodensystems der Elemente mit einer Verbindung der allgemeinen Formel M¹ₓ[M²H₃₊ₓ]_{b} unter Inertbedingungen oder unter Wasserstoffatmosphäre gemäß

M + o/6 M¹ₓ[M²H₃₊ₓ]_{b} → MHₙ* + p/6 M¹Hₘ* + q/6 M²*

umgesetzt werden, wobei gilt, dass
- M¹ = ein Alkalimetall ausgewählt aus der Gruppe bestehend aus Li, Na, K, Rb, Cs, ein Erdalkalimetall ausgewählt aus der Gruppe bestehend aus Be, Mg, Ca, Sr, Ba;
- x = 0 oder 1;
- M² = ein Element der 3. Hauptgruppe des Periodensystems der Elemente ausgewählt aus der Gruppe bestehend aus B, Al, Ga, In;
- b = die Wertigkeit von M¹;
- m = 1 oder 2, entsprechend der Wertigkeit des Metalls M¹;
- n = 1 oder 2, entsprechend der Wertigkeit des Metalls M;
sowie im Falle x = 0 ist p = 0 und
- für M = Alkalielement sind o und q = 2;
- für M = Erdalkalielement sind o und q = 4 sowie
im Falle x = 1 gilt:
- für M und M¹ = Alkalimetalle sind o, p, q = 2;
- für M und M¹ = Erdalkalimetalle sind o, p = 2 und q = 4;
- für M = Alkalimetall und M¹ = Erdalkalimetall sind o, p = 1 und q = 2 sowie
für M = Erdalkalimetall und M¹ = Alkalimetall o, p, q = 4 sind

Es entsteht eine Suspension enthaltend ein hochreaktives Metallhydrid MHₙ* im Gemisch mit q/6 Equivalenten (eq.) hochreaktivem Metall M²* und p/6 hochreaktivem Metallhydrid M¹Hₘ*. Falls für Folgereaktionen reine, d.h. nur ein Metallkation (abgesehen vom Metall M²) enthaltende Metallhydridprodukte gewünscht sind, ist es bevorzugt, dass M¹ und M identisch sind. Besonders bevorzugt sind beispielsweise die Kombinationen LiAlH₄ und Li oder NaAlH₄ und Na. Für den ebenfalls besonders bevorzugten Fall x = 0 erhält man notwendigerweise bezüglich des Kations direkt reine Metallhydridprodukte MHₙ*. Als Beispiel für eine besonders bevorzugte Kombination wird die Herstellung von aktivem Lithiumhydrid, LiH*, unter Verwendung von LiAlH₄ gezeigt:

3 Li + LiAlH₄ --> 4 LiH* + Al*

Die erfindungsgemäß hergestellten Mischungen aus hochreaktivem Metall M²* und dem hochreaktiven Metallhydrid MHₙ* können direkt als Suspensionen für Folgereaktionen verwendet werden. Es ist auch möglich, das Lösungsmittel weitgehend oder vollständig zu entfernen und so hochreaktive pulverförmige Mischungen aus M²* und MHₙ* herzustellen. Die lösemittelfreien, hochreaktiven Produkte erweisen sich bei Luftkontakt als pyrophor und sind deshalb ausschließlich im Vakuum oder unter Inertgasbedingungen (bevorzugt unter Argon) zu handhaben.

Als stöchiometrische Hydrierungsmittel oder Hydrierkatalysatoren werden bevorzugt hochreaktives/aktiviertes Aluminiummetall Al* verwendet. Insbesondere sind die Alkalialanate LiAlH₄ und NaAlH₄, die im industriellen Maßstab hergestellt werden, besonders geeignet. Auch Alan AlH₃ läßt sich mit gleichem Erfolg einsetzen.

Die Hydrierung der Metalle M wird bevorzugt in Gegenwart eines wasserfreien organischen Lösungsmittels durchgeführt. Als solches Lösemittel eignen sich Ether (offenkettige oder zyklische wie Diethylether, 1,2-Dimethoxyethan, Diethylenglykoldimethylether, Tetrahydrofuran, 2-Methyltetrahydrofuran, Tetrahydropyran, Dioxan, Dioxolan und weitere), tertiäre Amine (Triethylamin, Tributylamin, Morpholin etc), Kohlenwasserstoffe (gesättigte C₄ - C₁₈, bevorzugt Pentane, Hexane, Heptane, Octane etc; Aromaten wie Benzol, Toluol, Ethylbenzol, Xylole, Cumol etc) entweder in reiner Form oder als beliebige Mischungen von mindestens zwei der aufgeführten Lösemittel. Es ist jedoch prinzipiell auch möglich, die Hydrierungen ohne ein Lösungsmittel durchzuführen. So reagiert eine flüssige K/Na-Legierung bereits bei Raumtemperatur mit komplexen Alanaten, beispielsweise LiAlH₄. Da eine solche Reaktionsführung aber schlecht kontrollierbar ist, ist diese Prozeßvariante weniger bevorzugt.

Die Reaktionstemperaturen können in weiten Grenzen variiert werden, in der Regel liegen sie zwischen -20 und 150 °C, bevorzugt 0 und 100 °C und besonders bevorzugt zwischen 25 und 70 °C. Als Hydrierhilfsmittel werden bevorzugt Metallhydridoaluminate, beispielsweise LiAlH₄, NaAlH₄, KAlH₄ und/oder Alan AlH₃ eingesetzt. Die hergestellten Produkte fallen in feinverteilter, z.T. nanoskaliger Form an. Sie sind gegenüber Luft und Wasser extrem reaktiv, häufig sogar pyrophor (d.h. sie entzünden sich spontan bei Luftzutritt). Infolgedessen müssen sie unter Ausschluß reaktiver Gase, d.h. im Vakuum, unter Stickstoff- oder unter Edelgasatmosphäre gehandhabt und gelagert werden. Die hergestellten Produkte bestehen hauptsächlich aus dem hochreaktiven Metallhydrid MHₙ* und enthalten unterschiedliche Mengen an M²* sowie M¹Hₘ*. Das Molverhältnis zwischen MHₙ*, M²* und M¹Hₘ* beträgt 1 : 0,001 bis q/6 : 0 bis p/6, bevorzugt 1 : 0,01 bis q/6 : 0 bis p/6.

Die Erfindung betrifft weiterhin Verfahren gemäß den Ansprüchen 5 bis 9, bei denen die Metallhydrierungen in Gegenwart von Lewis-Säuren oder solchen ungesättigten Verbindungen vorgenommen, die hydrometalliert werden können. Diese Verbindungen werden im Folgenden als MHₙ* - Akzeptoren zusammengefasst.

Diese Verfahren gestatten direkt und auf bequeme Art und Weise beispielsweise für Synthesezwecke brauchbare, selektiv wirkende Metallhydridreagenzien oder organometallische Verbindungen der Metalle M zugewinnen. Außerdem vermeidet man die Manipulation und Isolierung der extrem empfindlichen, pyrophoren Metallhydrid-Festsubstanzen. Als Beispiele für eine solche Reaktionsführung mögen die folgenden Reaktionsschemata dienen:
MHₙ* + n R₃B ----> M[HBR₃]ₙ
MHₙ* + n Al(OR)₃ ----> M[HAl(OR)₃]ₙ

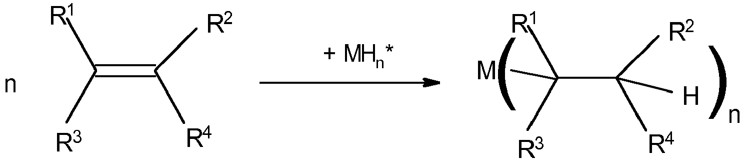

Die Reste R, R¹, R², R³, R⁴ sind beliebige unverzweigte, cyclische oder verzweigte Alkylgruppe enthaltend 1 bis 12 C-Atome.

Als MHₙ*-Akzeptoren sind vor allen Dingen folgende Verbindungen verwendbar:
bevorzugte Rohstoffe R₃B für sind: Tri-sec-butylboran, Trisiamylboran, Tricyclohexylboran,
bevorzugte Rohstoffe Al(OR)₃ für sind: Aluminium-trimethylat, Aluminium-tri(tert-butylat), Aluminium-tri(tert-pentylat) sowie
bevorzugte Olefine für sind solche mit R¹, R² und R³ = H, d.h. α-Olefine, besonders bevorzugt 1-Propen, 1-Buten, 1-Penten, 1-Hexen, 1-Hepten, 1-Octen. Weiterhin sind Olefine mit R² und R⁴ = Alkylgruppen enthaltend 1 - 12 C-Atome verwendbar. Unter bestimmten Bedingungen sind der erfindungsgemäßen Hydrolithiierungsreaktion auch Olefine mit internalisierter Doppelbindung zugänglich, beispielsweise 2-Buten, 2-Penten, 2-Hexen, 2-Hepten, 2-Octen, 2-Decen.

Die Verfahren der *in situ*-Nutzungsreaktionen der hochreaktiven Metallhydride MHₙ* erfolgen in der Weise, dass die hochreaktiven Metallhydride MHₙ* teilweise oder vollständig gebildet werden und erst dann der MHₙ* - Akzeptor zugegeben wird.

Die Hydrometallierungsreaktion von Olefinen kann durch Zugabe katalytisch wirkender Übergangsmetallverbindungen beschleunigt werden. Als Katalysatoren kommen die Halogen- oder Alkoxyverbindungen der 4. und 5. Nebengruppe des PSE in Frage, insbesondere die Chloride des Ti, Zr, Hf, V, Nb, Ta, bevorzugt TiCl₄, ZrCl₄ und VCl₃ sowie Metallocenverbindungen der genannten Metalle wie beispielsweise Cp₂TiCl₂, CpTiCl₃, Cp₂ZrCl₂ oder andere Komplexverbindungen der genannten Metalle. Sie werden in Mengen von 0,001 bis 10 mol%, bevorzugt 0,005 bis 5 mol% bezogen auf Metallhydrid MHₙ* zugegeben.

Die Erfindung wird anhand folgender Beispiele erläutert.

### Beispiel 1: Herstellung von aktivem Lithiumhydrid LiH* aus LiAlH₄ und Lithiumpulver in THF

In einem inertisierten (d.h. ausgeheizten und mit Argon befülltem) Glaskolben wurden 0,29 g (41,8 mmol) Lithiumpulver (D₅₀ = ca. 80 µm) in 50 mL trockenem Tetrahydrofuran suspendiert. Dann wurden 13,9 mmol LiAlH₄ in Form einer ca. 10 %igen Lösung in Tetrahydrofuran mittels Spritze zugegeben. Bereits nach wenigen Minuten verfärbte sich das Metall dunkel; nach 20-stündigem Rühren hatte sich eine schwarze Suspension gebildet. Der gebildete Feststoff wurde mittels Umkehrfritte unter Schutzgas (Argon) isoliert.
Ausbeute: 0,61 g

Ein Röntgendiffraktogramm ergab, dass der schwarze Feststoff die Phasen LiH und Al enthält.

### Beispiel 2: Herstellung von aktivem Lithiumhydrid LiH* aus LiAlH₄ und Lithiumpulver in Et₂O

In einem inertisierten (d.h. ausgeheizten und mit Argon befülltem) Glaskolben wurden 0,29 g (41,8 mmol) Lithiumpulver (D₅₀ = ca. 80 µm) in 45 mL trockenem Diethylether suspendiert. Dann wurden 13,9 mmol LiAlH₄ in Form einer ca. 12 %igen Lösung in Diethylether mittels Spritze zugegeben. Bereits nach wenigen Minuten verfärbte sich das Metall dunkel; nach 20-stündigem Rühren hatte sich eine schwarze Suspension gebildet. Das Lösungsmittel wurde unter Vakuum abkondensiert. Es verblieb ein pulverförmiger, pyrophorer Rückstand.
Ausbeute: 0,65 g

Ein Röntgendiffraktogramm ergab, dass der schwarze Feststoff aus den Phasen LiH und Al besteht.

### Beispiel 3: Herstellung von aktivem Natriumhydrid NaH* aus LiAlH₄ und Natriumpulver in THF

In einem inertisierten (d.h. ausgeheizten und mit Argon befülltem) Glaskolben wurden 0,96 g (42 mmol) Natriumpulver in 43,7 g trockenem Tetrahydrofuran suspendiert. Dann wurden 14,5 mmol LiAlH₄ in Form einer ca. 10 %igen Lösung in Tetrahydrofuran mittels Spritze unter magnetischem Rühren zugegeben. Nach etwa 3-stündigem Rühren bei RT färbte sich das Metall dunkel. Nach 20 Stunden Reaktionszeit wurde der Rührer abgestellt, eine Probe aus dem oberen Flüssigkeitsbereich entnommen, diese über ein Membranspritzenfilter (0,45 µm) klarfiltriert und auf gelöste Hydridaktivität untersucht (gasvolumetrisch). Bei Zersetzung mit Wasser entwickelte die klarfiltrierte Probe kein signifikantes Gasvolumen, d.h. das lösliche AlH₄⁻ war weitgehend vollständig zu unlöslichem NaH* und Al umgesetzt.

Der entstandene schwarze Feststoff wurde isoliert und getrocknet.
Ausbeute: 1,32 g (87 % d.Th.)
Analyse (ICP): Na = 27 mmol/g; Al = 9,1 mmol/g; Li = 9,1 mmol/g
Röntgendiffraktometrie:
- Natriumhydrid, Aluminiummetall (Hauptprodukte)
- Natriummetall, Na₂LiAlH₆ (Nebenbestandteile)

### Beispiel 4: Herstellung von hochaktivem LiH* und Addition an B(sec-Bu)₃

In einem inertisierten (d.h. ausgeheizten und mit Argon befülltem) Glaskolben wurden 0,31 g (44,7 mmol) Lithiumpulver (D₅₀ = ca. 80 µm) in 20 mL trockenem Tetrahydrofuran suspendiert. Dann wurden 13,9 mmol LiAlH₄ in Form einer ca. 10 %igen Lösung in Tetrahydrofuran mittels Spritze zugegeben. Bereits nach wenigen Minuten verfärbte sich das Metall dunkel; nach 20-stündigem Rühren hatte sich eine schwarze Suspension gebildet.

Dann wurden 43,6 g (55,7 mmol) B(sec-Bu)₃ als 1 M Lösung in THF innerhalb von 15 Miuten (min) bei Raumtemperatur zugegeben. Es wurde eine leichte Temperaturerhöhung (ca. 30-35°C) beobachtet. Zu bestimmten Zeiten wurden Lösungsproben entnommen, sofort mittels Membranfilter klarfiltriert und per ¹¹B-NMR-Spektroskopie untersucht:

| Reaktionszeit | 1 Stunde | 5 Stunden | 23 Stunden |
|---|---|---|---|
| Anteil B-Spezies, % | | | |
| Li[HB(sec-Bu)₃], Dublett δ¹¹B = -5,2 ppm | 79 | 85 | 92 |
| B(sec-Bu)₃, δ¹¹B = 85 ppm | 21 | 15 | 8 |

### Beispiel 5: Herstellung von hochaktivem LiH* und Addition an R-B-Isopinocampheyl-9-borabicyclo[3.3.1]nonane, R-Alpine-Boran

In einer inertisierten (d.h. ausgeheizten und mit Argon befüllten) 100 mL-Isogewindeflasche mit Septumverschluß wurden 0,155 g (22,3 mmol) Lithiumpulver (D₅₀ = ca. 80 µm) in 30 mL trockenem Tetrahydrofuran suspendiert. Dann wurden 7,1 mmol LiAlH₄ in Form einer ca. 10 %igen Lösung in Tetrahydrofuran mittels Spritze zugegeben. Bereits nach wenigen Minuten verfärbte sich das Metall dunkel; nach 20-stündigem Rühren hatte sich eine schwarze Suspension gebildet. Dann wurden 4,78 g (27 mmol) R-Alpine-Boran als 0,5 molare Lösung in THF innerhalb von 30 min mittels Spritze/Spritzenpumpe zugegeben. Es wurde eine spontane Erwärmung (zuletzt ca. 40°C beobachtet. Eine Probe des Reaktionsgemisches wurde klarfiltriert und per ¹¹B-NMR untersucht.
Alpine-Boran (δ¹¹B = 85,3 ppm): nicht nachweisbar, also vollständig umgesetzt
LiH-Additionsprodukt (δ¹¹B = -5,4 ppm, Dublett): ca. 100 %

### Beispiel 6: Herstellung von hochaktivem LiH* mit katalytischen LiAlH4 - Mengen

In einen inertisierten (d.h. ausgeheizten und mit Argon befülltem) Glaskolben wurden 0,284 g (40,9 mmol) Lithiumpulver (D₅₀ = ca. 80 µm) abgefüllt. Der Kolben wurde zweimal evakuiert und mit Wasserstoffgas belüftet. Über einen Schlauch wurde eine Verbindung zu einem graduierten Wasserstoffreservoir hergestellt. Dann wurden 24,5 g trockenes Tetrahydrofuran und 2,20 mmol LiAlH₄ als THF-Lösung zugegeben. Es wurde bei RT langsam magnetisch gerührt. Nach etwa 2 h färbte sich das Lithiumpulver schwarz, wobei der Verbrauch von Wasserstoffgas einsetzte. Nach 20 stündigem Rühren waren von der Suspension 529 mL (20,2 mmol) Wasserstoff absorbiert worden. Dieser Verbrauch entspricht 99 % der Theorie.

Der gebildete Feststoff wurde mittels Umkehrfritte isoliert.
Ausbeute: 0,29 g

Ein Röntgendiffraktogramm ergab, dass der schwarze, pyrophore Feststoff die Phasen LiH und AI/Li-Legierung enthält.

## Patentansprüche

1. Verfahren zur Herstellung von hochreaktiven Alkalimetall- oder Erdalkalimetall-Hydriden MHₙ* mit n = 1 oder 2 entsprechend der Wertigkeit des Metalls M, **dadurch gekennzeichnet, dass** Metalle M der ersten oder zweiten Periode des Periodensystems der Elemente mit einer Verbindung der allgemeinen Formel M¹ₓ[M²H₃₊ₓ]_{b} unter Inertbedingungen oder unter Wasserstoffatmosphäre gemäß
M + o/6 M¹ₓ[M²H₃₊ₓ]_{b} --> MHₙ* + p/6 M¹Hₘ* + q/6 M²*
umgesetzt werden, wobei gilt, dass
• M¹ = ein Alkalimetall ausgewählt aus der Gruppe bestehend aus Li, Na, K, Rb, Cs, ein Erdalkalimetall ausgewählt aus der Gruppe bestehend aus Be, Mg, Ca, Sr, Ba;
• x = 0 oder 1;
• M² = ein Element der 3. Hauptgruppe des Periodensystems der Elemente ausgewählt aus der Gruppe bestehend aus B, Al, Ga, In;
• b = die Wertigkeit von M¹;
• m = 1 oder 2, entsprechend der Wertigkeit des Metalls M¹;
• n = 1 oder 2, entsprechend der Wertigkeit des Metalls M;
sowie im Falle x = 0 ist p = 0 und
• für M = Alkalielement sind o und q = 2;
• für M = Erdalkalielement sind o und q = 4 sowie
im Falle x = 1 gilt:
• für M und M¹ = Alkalimetalle sind o, p, q = 2;
• für M und M¹ = Erdalkalimetalle sind o, p = 2 und q = 4;
• für M = Alkalimetall und M¹ = Erdalkalimetall sind o, p = 1 und q = 2 sowie
• für M = Erdalkalimetall und M¹ = Alkalimetall sind o, p, q = 4.

2. Verfahren zur Herstellung von hochreaktiven Metallhydriden MHₙ* nach Anspruch 1, **dadurch gekennzeichnet, dass** die Umsetzung in einem aprotischen Lösemittel oder Lösemittelgemisch vorgenommen wird, wobei mindestens eine der Lösemittelkomponenten ein offenkettiger oder zyklischer Ether, ein tertiäres Amin oder ein Kohlenwasserstoff ist, entweder in reiner Form oder als beliebige Mischungen von mindestens zwei der aufgeführten Lösemittel.

3. Verfahren nach Anspruch 2, **dadurch gekennzeichnet, dass** ein offenkettiger oder zyklischer Ether ausgewählt aus der Gruppe bestehend aus Diethylether, 1,2-Dimethoxyethan, Diethylenglykoldimethylether, Tetrahydrofuran, 2-Methyltetrahydrofuran, Tetrahydropyran, Dioxan, Dioxolan; ein tertiäres Amin ausgewählt aus der Gruppe bestehend aus Triethylamin, Tributylamin, Morpholin oder ein Kohlenwasserstoff ausgewählt aus der Gruppe bestehend aus gesättigte C₄ - C₁₈ -Kohlenwasserstoffen, bevorzugt Pentane, Hexane, Heptane, Octane; Aromaten ausgewählt aus der Gruppe bestehend aus Benzol, Toluol, Ethylbenzol, Xylole, Cumol.

4. Verfahren nach Anspruch 1 bis 3, **dadurch gekennzeichnet, dass** die Reaktionstemperatur im Bereich zwischen -20 und 150 °C, bevorzugt 0 und 100 °C und besonders bevorzugt zwischen 25 und 70 °C liegt.

5. Verfahren für die Umsetzung mit Lewis-Säuren der 3. Hauptgruppe des Periodensystems der Elemente oder zur Hydrometallierung von Olefinen enthaltend die folgenden Schritte:
- Herstellung von hochreaktiven Alkalimetall- oder Erdalkalimetall-Hydriden MHₙ* mit n = 1 oder 2 entsprechend der Wertigkeit des Metalls M gemäß einem der Ansprüche 1 bis 4; und
- Umsetzung der erhaltenen hochreaktiven Alkalimetall- oder Erdalkalimetall-Hydriden MHₙ* mit Lewis-Säuren der 3. Hauptgruppe des Periodensystems der Elemente oder zur Hydrometallierung von Olefinen.

6. Verfahren nach Anspruch 5 zur Herstellung von Metallhydridoboraten M[HBR₃]ₙ oder Metallhydridoaluminaten M[HAl(OR)₃]ₙ mit R = unverzweigte, cyclische oder verzweigte Alkylgruppe enthaltend 1 bis 12 C-Atome, bei dem die erhaltenen hochreaktiven Alkalimetall- oder Erdalkalimetall-Hydriden MHₙ* eingesetzt werden.

7. Verfahren nach Anspruch 5, **dadurch gekennzeichnet, dass** eine Lewis-Säure ausgewählt wird aus der Gruppe bestehend ausTri-sec-butylboran, Trisiamylboran, Tricyclohexylboran, Aluminium-trimethylat, Aluminium-tri(tert-butylat), Aluminium-tri(tert-pentylat).

8. Verfahren nach Anspruch 5, **dadurch gekennzeichnet, dass** für die Hydrometallierung ein Olefin R¹R³C=CR²R⁴ mit R¹, R² und R³ = H, wobei vorzugsweise ein α-Olefin aus der Gruppe bestehend aus 1-Propen, 1-Buten, 1-Penten, 1-Hexen, 1-Hepten, 1-Octen ausgewählt wird.

9. Verfahren nach Anspruch 5 , **dadurch gekennzeichnet, dass** für die Hydrometallierung ein Olefin R¹R³C=CR²R⁴, wobei R¹ und R³ = H sowie R² und R⁴ = Alkylgruppen enthaltend 1 - 12 C-bedeuten, eingesetzt wird.

## Claims

1. A method for preparing highly reactive alkali metal or alkaline earth metal hydrides MHₙ*, where n = 1 or 2, corresponding to the valency of the metal M, **characterized in that** metals M of the first or second period of the periodic table of the elements are reacted with a compound of the general formula M¹ₓ[M²H₃₊ₓ]_{b} under inert conditions or under a hydrogen atmosphere according to
M + o/6 M¹ₓ[M²H₃₊ₓ]_{b} → MHₙ* + p/6 M¹Hₘ* + q/6 M²*
Wherein
• M¹ = an alkali metal selected from the group consisting of Li, Na, K, Rb, Cs, an alkaline earth metal selected from the group consisting of Be, Mg, Ca, Sr, Ba;
• x = 0 or 1;
• M² = an element of main group 3 of the periodic table of the elements selected from the group consisting of B, Al, Ga, In;
• b = the valency of M¹;
• m = 1 or 2, corresponding to the valency of the metal M¹;
• n = 1 or 2, corresponding to the valency of the metal M;
• and in the case in which x = 0, p = 0 and
• for M = alkali element, o and q = 2;
• for M = alkaline earth element, o and q = 4 , and
• in the case in which x = 1:
• for M and M¹ = alkali metals, o, p, q = 2;
• for M and M¹ = alkaline earth metals, o, p = 2 and q = 4;
• for M = alkali metal and M¹ = alkaline earth metal, o, p = 1 and q = 2, and
• for M = alkaline earth metal and M¹ = alkali metal, o, p, q = 4.

2. The method for preparing highly reactive metal hydrides MHₙ* according to claim 1, **characterized in that** the reaction is carried out in an aprotic solvent or solvent mixture, wherein at least one of the solvent components is an open-chain or cyclic ether, a tertiary amine or a hydrocarbon, either in pure form or as any mixtures of at least two of the listed solvents.

3. The method according to claim 2, **characterized in that** an open-chain or cyclic ether selected from the group consisting of diethyl ether, 1,2-dimethoxyethane, diethylene glycol dimethyl ether, tetrahydrofuran, 2-methyltetrahydrofuran, tetrahydropyran, dioxane, dioxolane; a tertiary amine selected from the group consisting of triethylamine, tributylamine, morpholine or a hydrocarbon selected from the group consisting of saturated C₄-C₁₈ hydrocarbons, preferably pentanes, hexanes, heptanes, octanes; aromatics selected from the group consisting of benzene, toluene, ethylbenzene, xylenes, cumene.

4. The method according to claims 1 to 3, **characterized in that** the reaction temperature is in the range between -20 and 150 °C, preferably 0 to 100 °C and particularly preferably between 25 and 70 °C.

5. A method for the reaction with Lewis acids of main group 3 of the periodic table of the elements or for the hydrometalation of olefins comprising the following steps:
- preparing highly reactive alkali metal or alkaline earth metal hydrides MHₙ*, where n = 1 or 2, corresponding to the valency of the metal M according to any one of claims 1 to 4; and
- reacting the obtained highly reactive alkali metal or alkaline earth metal hydrides MHₙ* with Lewis acids of main group 3 of the periodic table of the elements or for the hydrometalation of olefins.

6. The method according to claim 5 for preparing metal hydridoborates M[HBR₃]ₙ or metal hydridoaluminates M[HAl(OR)₃]ₙ, where R = an unbranched, cyclic or branched alkyl group containing 1 to 12 carbon atoms, in which the obtained highly reactive alkali metal or alkaline earth metal hydrides MHₙ* are used.

7. The method according to claim 5, **characterized in that** a Lewis acid is selected from the group consisting of tri-sec-butyl borane, trisiamylborane, tricyclohexylborane, aluminum trimethylate, aluminum tri(tert-butylate), aluminum tri(tert-pentylate).

8. The method according to claim 5, **characterized in that**, for the hydrometalation, an olefin R¹R³C=CR²R⁴, where R¹, R² and R³ = H, wherein preferably an α-olefin is selected from the group consisting of 1-propene, 1-butene, 1-pentene, 1-hexene, 1-heptene, 1-octene.

9. The method according to claim 5, **characterized in that**, for the hydrometalation, an olefin R¹R³C=CR²R⁴ is used, wherein R¹ and R³ = H and R² and R⁴ = alkyl groups containing 1-12 C.

## Revendications

1. Procédé de production d'hydrures métalliques alcalins ou alcalino-terreux hautement réactifs MHₙ* avec n = 1 ou 2 correspondant à la valence du métal M, **caractérisé en ce que** l'on fait réagir des métaux M de la première ou seconde période de la classification périodique des éléments avec un composé de formule générale M¹x[M²H₃₊ₓ]_{b} dans des conditions inertes ou sous atmosphère d'hydrogène conformément à
M + o/6 M¹ₓ[M²H₃₊ₓ]_{b} --> MHₙ* + p/6 M¹Hₘ* + q/6 M²*
dans lequel
• M¹ = un métal alcalin sélectionné à partir du groupe constitué de Li, Na, K, Rb, Cs, un métal alcalino-terreux sélectionné à partir du groupe constitué de Be, Mg, Ca, Sr, Ba ;
• x = 0 ou 1 ;
• M² = un élément du troisième groupe principal de la classification périodique des éléments sélectionné à partir du groupe constitué de B, Al, Ga, In ;
• b = la valence de M¹ ;
• m = 1 ou 2, correspondant à la valence du métal M¹ ;
• n = 1 ou 2, correspondant à la valence du métal M ;
et, dans le cas où x = 0, p = 0 et
• pour M = élément alcalin, o et q = 2 ;
• pour M = élément alcalino-terreux, o et q = 4, et
dans le cas où x = 1 :
• pour M et M¹ = métaux alcalins, o, p, q = 2 ;
• pour M et M¹ = métaux alcalino-terreux, o, p = 2 et q = 4 ;
• pour M = métal alcalin et M¹ = métal alcalino-terreux, o, p = 1 et q = 2 et
• pour M = métal alcalino-terreux et M¹ = métal alcalin, o, p, q = 4.

2. Procédé de production d'hydrures métalliques hautement réactifs MHₙ* selon la revendication 1, **caractérisé en ce que** la réaction est effectuée dans un solvant ou un mélange de solvants aprotique, dans lequel au moins un des composants de solvant est un éther à chaîne ouverte ou cyclique, une amine tertiaire ou un hydrocarbure, soit sous forme pure, soit sous forme de mélanges quelconques d'au moins deux des solvants énumérés.

3. Procédé selon la revendication 2, **caractérisé par** un éther à chaîne ouverte ou cyclique sélectionné à partir du groupe constitué d'éther diéthylique, 1,2-diméthoxyéthane, éther diméthylique du diéthylèneglycol, tétrahydrofurane, 2-méthyltétrahydrofurane, tétrahydropyrane, dioxane, dioxolane ; une amine tertiaire sélectionnée à partir du groupe constitué de triéthylamine, tributylamine, morpholine ou un hydrocarbure sélectionné à partir du groupe constitué d'hydrocarbures C₄ - C₁₈ saturés, de préférence pentanes, hexanes, heptanes, octanes ; des aromatiques sélectionnés à partir du groupe constitué de benzène, toluène, éthylbenzène, xylènes, cumène.

4. Procédé selon l'une quelconque des revendications 1 à 3, **caractérisé en ce que** la température de réaction est comprise entre -20 et 150 °C, de préférence entre 0 et 100 °C et de manière particulièrement préférée entre 25 et 70 °C.

5. Procédé pour la réaction avec des acides de Lewis du troisième groupe principal de la classification périodique des éléments ou pour l'hydrométallisation d'oléfines comprenant les étapes suivantes :
- la production d'hydrures métalliques alcalins ou alcalino-terreux hautement réactifs MHₙ* avec n = 1 ou 2 correspondant à la valence du métal M selon l'une quelconque des revendications 1 à 4 ; et
- la réaction des hydrures métalliques alcalins ou alcalino-terreux hautement réactifs MHₙ* obtenus avec des acides de Lewis du troisième groupe principal de la classification périodique des éléments ou pour l'hydrométallisation d'oléfines.

6. Procédé selon la revendication 5 pour la production d'hydridoborates métalliques M[HBR₃]ₙ ou d'hydridoaluminates métalliques M[HAl(OR)₃]ₙ avec R = groupe alkyle non ramifié, cyclique ou ramifié contenant 1 à 12 atomes de carbone, dans lequel sont utilisés les hydrures métalliques alcalins ou alcalino-terreux hautement réactifs MHₙ* obtenus.

7. Procédé selon la revendication 5, **caractérisé en ce qu'**un acide de Lewis est sélectionné à partir du groupe constitué de tri-sec-butylborane, trisiamylborane, tricyclohexylborane, triméthylate d'aluminium, tri(tert-butylate) d'aluminium, tri(tert-pentylate) d'aluminium.

8. Procédé selon la revendication 5, **caractérisé en ce que**, pour l'hydrométallisation, est utilisée une oléfine R¹R³C=CR²R⁴ avec R¹, R² et R³ = H, dans lequel de préférence une oléfine α est sélectionnée à partir du groupe constitué de 1-propène, 1-butène, 1-pentène, 1-hexène, 1-heptène, 1-octène.

9. Procédé selon la revendication 5, **caractérisé en ce que**, pour l'hydrométallisation, est utilisée une oléfine R¹R³C=CR²R⁴, dans lequel R¹ et R³ = H et R² et R⁴ = groupes alkyle contenant 1 à 12 atomes de carbone.
